# EUROPÄISCHE PATENTSCHRIFT

(11) **EP 4 251 859 B1**
(45) Veröffentlichungstag und Bekanntmachung des Hinweises auf die Patenterteilung: **01.01.2025**
(21) Anmeldenummer: 21816344.2
(22) Anmeldetag: 16.11.2021
(51) Int. Cl.: F01K 3/12, F01K 3/18

(54) **SYSTEM UND VERFAHREN ZUR SPEICHERUNG UND ABGABE VON ELEKTRISCHER ENERGIE MIT DEREN SPEICHERUNG ALS WÄRMEENERGIE**
SYSTEM AND METHOD FOR STORING AND RELEASING ELECTRICAL ENERGY, THE ENERGY BEING STORED AS THERMAL ENERGY
SYSTÈME ET PROCÉDÉ DE STOCKAGE D'ÉNERGIE ÉLECTRIQUE SOUS FORME D'ÉNERGIE THERMIQUE ET DE LIBÉRATION DE CELLE-CI

(30) Priorität: 30.11.2020 DE 102020131706
(43) Veröffentlichungstag der Anmeldung: 04.10.2023
(73) Patentinhaber: MAN Energy Solutions SE, 86153 Augsburg (DE)
(72) Erfinder: SCHUHBAUER, Christian, 94336 Hunderdorf (DE); SCHLEGL, Gerhard, 86169 Augsburg (DE); STETKA, Markus, 81369 München (DE); ECKERMANN, Moritz, 86150 Augsburg (DE); STEINHART, Lukas, 86485 Biberbach (DE); ACHNECK, Johannes, 80687 München (DE)
(86) Internationale Anmeldenummer: PCT/EP2021/081886
(87) Internationale Veröffentlichungsnummer: WO 2022/112063

(56) Entgegenhaltungen:
- WO-A1-2015/185891
- US-A1- 2016 222 830
- US-A1- 2018 179 916
- US-A1- 2020 083 782
- US-A1- 2020 248 592

## Beschreibung

Die Erfindung bezieht sich auf ein System zur Speicherung und Abgabe von elektrischer Energie mit deren Speicherung als Wärmeenergie, gemäß dem Oberbegriff von Anspruch 1. Die Erfindung bezieht sich auch auf ein Verfahren zur Speicherung und Abgabe von elektrischer Energie mit deren Speicherung als Wärmeenergie.

Elektrischer Strom aus erneuerbaren Energiequellen wie Windkraft und Photovoltaik ist sehr schwankend in seinem Anfall. Zudem ist die Nachfrage nach elektrischem Strom im Verlauf eines Tages ebenfalls schwankend. Mit Energiespeichern kann elektrische Energie zu Zeiten eines Überangebotes gespeichert und, wenn sie nachgefragt wird, wieder zur Verfügung gestellt werden. Eine Möglichkeit hierzu bilden Thermoelektrische Energiespeicher (TEES), mit welchen während eines Beladevorgangs elektrische Energie in Wärme umgewandelt wird und während eines Entladevorgangs mit dieser Wärme zu Bedarfszeiten wieder elektrischer Strom erzeugt wird. Durch ein solches System muss aktuell nicht gebrauchte Energie nicht abgeregelt werden und die Versorgungssicherheit wird erhöht. Weiterhin kann bislang ungenutzte Wärme mit thermischen Speichern gespeichert und nutzbar gemacht werden.

Der Wirkungsgrad solcher Energiespeicher kann noch gesteigert werden, indem die Wärme nicht direkt über eine elektrische Widerstandsheizung erzeugt wird, sondern indirekt durch Nutzung der elektrischen Energie zum Betrieb einer Wärmepumpe.

Ein solches Energiespeichersystem ist beispielsweise aus EP 3 054 155 A1 bzw. aus US 2016 / 222 830 A1 bekannt. Es umfasst eine Wärmepumpe, einen Wasserdampfkreislauf, ein erstes Wärmespeichersystem und ein zweites Wärmespeichersystem. Das Wärmepumpensystem ist beliebig. Bevorzugtes Arbeitsmittel ist CO2 oder Luft. Das erste Wärmespeichersystem enthält einen Wärmeträger, der von einem Arbeitsmittel der Wärmepumpe erwärmt wird. Das zweite Wärmespeichersystem arbeitet bevorzugt mit Wasser als Wärmeträger, welches während eines Entladevorgangs mit dem Kondensat des Wasserdampfkreislaufs beheizt wird. Das erwärmte Wasser wird in einem separaten Heißwassertank gespeichert und während eines Beladevorgangs zur Wärmepumpe geführt, wo es das aus dem Expander strömende Arbeitsmittel erwärmt, bevor es in einen separaten Kaltwassertank geführt wird. Der Wärmeträger des ersten Wärmespeichersystems wird in zwei Stufen auf seine Endtemperatur gebracht. In einer ersten Stufe verdichtet ein Standardkompressor das Arbeitsmittel der Wärmepumpe auf eine Temperatur von 300°C bis 400°C, welches seine Wärme anschließend an den Wärmeträger des ersten Wärmespeichersystems abgibt. In einem zweiten Schritt wird der Wärmeträger über einen geregelten elektrischen Heizer auf seine Endtemperatur gebracht. Durch diese Vorgehensweise müssen die Komponenten der Wärmepumpe nicht auf Hochtemperaturbedingungen ausgelegt werden. Dies ist nur für die Komponenten stromabwärts des elektrischen Heizers notwendig. Dem steht als Nachteil gegenüber, dass der Gesamtwirkungsgrad durch die Umwandlung von hochwertiger Elektroenergie in minderwertige Wärmeenergie sinkt. Die Wärmespeicher der beiden Wärmespeichersysteme können als Schichtspeicher ausgeführt sein. Das erste Wärmespeichersystem kann weiterhin auch externe Wärme, beispielsweise von einem Solarkraftwerk erhalten.

Ein ähnliches Energiespeichersystem ist aus EP 2 942 492 A1 bekannt. Hierbei findet eine Wärmekopplung des zweiten Wärmespeichersystems mit der Wärmepumpe durch Wärmeübertrager stromaufwärts und stromabwärts des Expanders statt.

Bei einem Energiespeichersystem gemäß EP 3 444 448 A1 bzw. gemäß US 2020 / 248 592 A1 kann die Wärme des zweiten Wärmespeichersystems durch eine steuerbare Ventileinheit entweder an die Wärmepumpe oder an einen Luftkühler abgegeben werden.

Aus der EP 2 986 825 A1 ist ein Kraftwerk bekannt, bei dem die Abwärme des Kondensators stromabwärts der Dampfturbine in einem Wärmespeicher gespeichert wird, wobei der Wärmespeicher als Wärmepumpe ausgestaltet sein kann, der ein Fernwärmenetz mit Wärme versorgt.

Die EP 2 653 668 A1 betrifft ein Energiespeichersystem, bei dem sowohl der Ladezyklus als auch der Entladezyklus als Rankine-Prozess ausgestaltet sind. In die im Ladezyklus betriebene Wärmepumpe kann Wärme über eine zweite Wärmepumpe eingekoppelt werden.

Ein weiteres Energiespeichersystem mit kaskadenartig angeordneten Wärmepumpen ist in DE10 2013 006 814 A1 offenbart. Der Wärmespeicher ist hier als großvolumiger Schichtspeicher mit einer wässrigen Salzlösung als Wärmespeichermedium ausgeführt. Die gespeicherte Wärme wird entweder als thermische Heizenergie oder als elektrische Energie über einen ORC-Wärmekraftprozess abgegeben.

Die bekannten Systeme und Verfahren ermöglichen zwar ein flexibles Einspeichern und Ausspeichern von elektrischer Energie, jedoch sind damit die Möglichkeiten zur Optimierung des Gesamtwirkungsgrades noch nicht erschöpft.

Hier nun soll die Erfindung Abhilfe schaffen. Ihr liegt von daher die Aufgabe zugrunde, ein System und ein Verfahren der eingangsgenannten Art so zu verbessern, dass sie einen höheren Gesamtwirkungsgrad aufweisen.

Diese Aufgabe wird bei einem gattungsgemäßen System durch die kennzeichnenden Merkmale des Anspruchs 1 und bei einem gattungsgemäßen Verfahren durch die Merkmale des Anspruchs 13 gelöst. Die Unteransprüche geben darüberhinausgehend vorteilhafte Ausgestaltungsmöglichkeiten an.

Der Erfindung liegt die Erkenntnis zugrunde, dass ein System (wie es beispielweise aus EP 3 054 155 A1 bekannt ist), bei dem die Restwärme des Kondensats aus dem Luftkondensator über einen Niedertemperatur(NT)-Wärmeübertrager an einen NT-Wärmeträger abgegeben und dieser anschließend in einen NT-Heißspeicher geführt wird, den Nachteil hat, dass das Kondensat eine höhere Temperatur als der NT-Wärmeträger haben muss, damit überhaupt Wärme übertragen werden kann. Soll dabei die Größe des NT-Wärmeübertragers minimiert werden, ist hierfür eine entsprechend große Temperaturdifferenz notwendig. Für eine gewünschte Kondensattemperatur ist wegen des Betriebs im Nassdampfgebiet auch der Druck festgelegt. Dies hat Auswirkungen auf die stromaufwärtigen Systemkomponenten, d.h. der minimale Druck am Austritt der Dampfturbine kann nicht kleiner als der Kondensationsdruck sein. Dadurch ist die Leistung der Dampfturbine begrenzt. Alternativ führt eine Verminderung der Kondensationstemperatur zu einem größeren Wärmeübertrager. Zudem ist sowohl das Kondensat als Heizmedium flüssig als auch der NT-Wärmeträger flüssig, was durch den dadurch bedingten relativ kleinen Massenstrom nur zu einem begrenzten Wärmeübergang in dem Flüssig-flüssig-NT-Wärmeübertrager führt.

Dem gegenüber werden durch die erfindungsgemäßen Merkmale der Wirkungsgrad und die Wirtschaftlichkeit des Gesamtsystems erhöht. Hierbei ist der NT-Wärmeübertrager als Kondensator ausgeführt und wird mit Dampf aus der Dampfturbineneinheit betrieben. Dampf hat zum einen den Vorteil, dass er einen größeren Energieinhalt als Kondensat besitzt und dass zum anderen der kondensierende Dampf einen besseren Wärmeübergang hat. Beide Faktoren führen dazu, dass bei gleichem Wärmestrom der erfindungsgemäße Wärmeübertrager wesentlich kleiner ausgeführt werden kann und flexibler im Betrieb ist. Ein weiterer Vorteil wird dadurch erreicht, dass die Dampfturbine zu niedrigeren Drücken und Temperaturen entspannen kann, wodurch ihr Wirkungsgrad steigt. Auf diese Weise wird die in ein Energiespeichersystem eingetragene Energie in einem äußerst hohen Maß genutzt und dadurch eine wirtschaftliche Lösung bei gleichzeitig hohem Wirkungsgrad erreicht, wobei kommerziell verfügbare Komponenten eingesetzt werden können.

Durch eine entsprechende Dimensionierung des HT-Wärmespeicherkreislaufs kann das System symmetrisch oder asymmetrisch betrieben werden, d.h. Beladezeiten und Entladezeiten können sich unterscheiden und auch die eingetragenen Energieleistungen und ausgetragenen Energieleistungen - ob elektrisch oder thermisch - können sich unterscheiden und an die jeweiligen Randbedingungen angepasst werden.

Die genutzte Energiequelle zur Beladung des thermischen Speichers ist bevorzugt strombasiert, ist jedoch nicht darauf beschränkt. Es ist ebenso möglich, Wärmeenergie direkt in den thermischen Speicher einzukoppeln. Steht die Wärme auf niedrigerem Temperaturniveau als die des Speichers zur Verfügung, kann sie mittels einer weiteren Wärmepumpe auf das Arbeitsmittel der Wärmepumpe übertragen werden. Es ist weiterhin möglich, die Wärme des HT-Wärmespeicherkreislaufs an einen externen Wärmeverbraucher abzugeben. Damit kann z.B. Prozesswärme zur Verfügung gestellt werden, ein Gasstrom erwärmt werden oder Nutzdampf erzeugt werden, wobei dieser direkt genutzt werden oder wieder mittels Dampfturbine und Generator rückverstromt werden kann. Zudem gibt es die Option der Kältebereitstellung aus dem Wärmepumpenprozess.

Die Dampfturbineneinheit weist eine Hochdruckturbine und eine Mitteldruck/Niederdruckturbine auf und ist zwischen der Hochdruckturbine und der Mitteldruck/Niederdruckturbine ein Zwischenüberhitzer angeordnet. Auch hier führt die hohe Temperatur des mit dem Hochtemperatur-Wärmeträger betriebenen Zwischenüberhitzers zu einer Wirkungsgraderhöhung. Dabei strömt ein Teil des Hochtemperatur-Wärmeträgerstroms vor Eintritt in die Dampferzeugungseinheit durch den Zwischenüberhitzer.

Der Niedertemperatur-Wärmespeicherkreislauf ist besonders vorteilhaft an Standorten, wo keine Hochtemperaturwärmequelle für die Wärmepumpe zur Verfügung steht und ansonsten Umgebungsluft als Wärmequelle zum Einsatz käme. Durch das höhere Temperatur-Ausgangsniveau erhöht sich die Leistungszahl der Wärmepumpe. Die Wärmeübertrager können deutlich kleiner gebaut werden, da die Wärmeübertragung von der Flüssigphase auf das Wärmepumpenarbeitsmedium deutlich besser ist als von Luft auf das Wärmepumpenarbeitsmedium.

Vorzugsweise weist der Wärmepumpenkreislauf ferner einen Rekuperator und einen Expander auf und durchströmt das erste Arbeitsmittel nacheinander den Verdichter, den Hochtemperatur-Wärmeübertrager, den Rekuperator, den Expander, den Arbeitsmittel-Erwärmer und wieder den Rekuperator. Hierdurch kann die im ersten Arbeitsmittel stromabwärts des Hochtemperatur-Wärmeübertragers noch vorhandene Restwärme noch genutzt werden, um das in den Verdichter eintretende erste Arbeitsmittel weiter zu erwärmen. In einer bevorzugten Ausführungsform wird die gewünschte Eintrittstemperatur des Arbeitsmittels in den HT-Wärmeübertrager alleine durch die im Verdichter erzeugte Verdichtungswärme bereitgestellt. Hierzu muss der Verdichter entsprechend temperaturbeständig ausgelegt werden. Entsprechende Maßnahmen sind aus der Gasturbinentechnik bekannt. Durch den Verzicht auf eine thermische Unterstützung durch eine elektrische Widerstandsheizung ergibt sich in dieser Ausführung ein besonders hoher Wirkungsgrad.

Der Betrieb des Expanders erfolgt bevorzugt im positiven Celsius-Temperaturbereich. Dadurch erhöht sich die Betriebssicherheit, da keine Phasenwechsel mit Vereisungen des Arbeitsmittels auftreten.

In einer bevorzugten Weiterbildung der Erfindung weist der Hochtemperatur-Wärmespeicherkreislauf ferner einen Hochtemperatur-Kaltspeicher und einen Hochtemperatur-Heißspeicher auf und durchströmt der Hochtemperatur-Wärmeträger nacheinander den Hochtemperatur-Kaltspeicher, den Hochtemperatur-Wärmeübertrager, den Hochtemperatur-Heißspeicher und die Dampferzeugungseinheit. Durch die hohe Temperatur des Hochtemperatur-Wärmeträgers kann ein Dampf mit entsprechend hoher Temperatur und hohem Druck erzeugt werden, was sich günstig auf den Wirkungsgrad des Rückverstromungskreislaufs auswirkt.

Vorteilhafterweise weist der Wärmepumpenkreislauf einen zweiten Verdichter auf und sind der Wärmepumpenkreislauf und der Hochtemperatur-Wärmespeicherkreislauf an einen zweiten Hochtemperatur-Wärmeübertrager angeschlossen zum Übertragen von Wärme vom ersten Arbeitsmittel auf den Hochtemperatur-Wärmeträger , wobei im Wärmepumpenkreislauf der zweite Verdichter stromabwärts des (ersten) Hochtemperatur-Wärmeübertragers und der zweite Hochtemperatur-Wärmeübertrager stromabwärts des zweiten Verdichters angeordnet ist, und wobei im Hochtemperatur-Wärmespeicherkreislauf der zweite Hochtemperatur-Wärmeübertrager parallel zum Hochtemperatur-Wärmeübertrager zuschaltbar ist. Durch diese Maßnahme erhöht sich der Wirkungsgrad.

Bevorzugt sind der Verdichter, der Expander und der zweite Verdichter über ein gemeinsames Getriebe mechanisch miteinander gekoppelt. Hierdurch ergibt sich eine kompakte Gesamtkonstruktion. Durch die Verkleinerung der Verbindungselemente verringern sich Reibungsverluste, was sich günstig auf den mechanischen Wirkungsgrad auswirkt.

In einer vorteilhaften Ausführungsform der Erfindung ist im Hochtemperatur-Wärmespeicherkreislauf zwischen dem/den Hochtemperatur-Wärmeübertrager/n und dem Hochtemperatur-Heißspeicher ein elektrischer Heizer angeordnet. Hierdurch kann der HT-Wärmeträger kurz vor dem Eintritt in den HT-Heißspeicher äußerst genau auf die gewünschte Solltemperatur erwärmt werden.

In einer bevorzugten Ausführungsform der Erfindung weist die Dampferzeugungseinheit einen Hochtemperatur-Vorwärmer, einen Dampferzeuger und einen Überhitzer auf, die das zweite Arbeitsmittel in dieser Reihenfolge und der Hochtemperatur-Wärmeträger im Gegenstrom durchströmt. Dabei ist der Hochtemperatur-Wärmeträgeraustritt des Hochtemperatur-Vorwärmers vorteilhafterweise an den Eintritt des Hochtemperatur-Kaltspeichers angeschlossen. Das schrittweise Abgeben der Wärmeenergie des HT-Wärmeträgers zur Dampferzeugung führt zu einer effektiven Nutzung.

In einer günstigen Weiterbildung der Erfindung weist der Niedertemperatur-Wärmespeicherkreislauf mindestens einen weiteren Kondensator stromabwärts des ersten Kondensators auf, wobei alle diese Kondensatoren im Rückverstromungskreislauf zueinander parallelgeschaltet sind und im Niedertemperatur-Wärmespeicherkreislauf stromabwärts hintereinander angeordnete weitere Kondensatoren jeweils an eine Anzapfleitung der Dampfturbineneinheit an Stellen zwischen deren Eintritt und Austritt angeschlossen sind, die im Rückverstromungskreislauf stromaufwärts hintereinander angeordnet sind. Die Größe der Kondensatoren sinkt mit deren steigender Anzahl. Durch die schrittweise Erhöhung der Temperatur des NT-Wärmeträgers erhöht sich der Speicherwirkungsgrad.

Bevorzugt weist der Niedertemperatur-Wärmespeicherkreislauf stromabwärts des letzten Kondensators eine Speichereinrichtung für den Niedertemperatur-Wärmeträger auf mit einem Speicherbereich für kalten Niedertemperatur-Wärmeträger und einem Speicherbereich für warmen Niedertemperatur-Wärmeträger, wobei der Eintritt des ersten Kondensators an den Speicherbereich für kalten Niedertemperatur-Wärmeträger und der Austritt des letzten Kondensators an den Speicherbereich für warmen Niedertemperatur-Wärmeträger angeschlossen ist, und der Arbeitsmittel-Erwärmer an den Speicherbereich für warmen Niedertemperatur-Wärmeträger angeschlossen ist.

Von Vorteil ist es, wenn die Speichereinrichtung für den Niedertemperatur-Wärmeträger ein Schichtspeichertank ist, in dem sowohl kaltes als auch heißes Wasser gemeinsam gespeichert werden können. Eine solche Konstruktion spart Rohrleitungen und Armaturen und führt zu verminderten Investitionskosten sowie geringerem Raumbedarf. Darüber hinaus werden durch den drucklosen Betrieb des Schichtspeichers die Investitionskosten weiter gesenkt und die Betriebskosten minimiert. Die unterschiedlichen Temperaturbereiche werden durch geeignete Maßnahmen thermisch voneinander getrennt. Zu- und Abfuhr von Wasser mit unterschiedlichen Temperaturen erfolgt durch bekannte Vorrichtungen, die das Wasser unterschiedlicher Temperaturen an geeigneten Stellen zuführen bzw. abführen. Optional ist die Verwendung zusätzlicher Wärmespeichermedien möglich, wie Feststoffe, bspw. Steine oder Keramik, zur Speicherung von sensibler Wärme oder Phasenänderungsmaterialien zur Speicherung von latenter Wärme.

In einer bevorzugten Ausführungsform der Erfindung weist der Rückverstromungskreislauf mindestens einen Niederdruck-Vorwärmer auf, der stromabwärts parallelgeschalteter Kondensatoren angeordnet und an eine Anzapfleitung der Dampfturbineneinheit an Stellen zwischen deren Eintritt und Austritt angeschlossen ist.

Vorteilhafterweise verzweigt sich dabei eine Anzapfleitung stromaufwärts des mindestens einen weiteren Kondensators und des mindestens einen Niederdruck-Vorwärmers und ist sie an deren jeweiligen Eintritt für das zweite Arbeitsmittel angeschlossen. Diese Verschaltung erlaubt eine flexible Nutzung der Wärmeenergie. Je nach Bedarfssituation kann der Anteil der abgebbaren Wärmeenergie entweder zugunsten des Rückverstromungskreislaufs oder zugunsten des Niedertemperatur-Wärmespeicherkreislaufs verändert werden.

In günstiger Weiterbildung der Erfindung ist im Rückverstromungskreislauf stromaufwärts der Dampferzeugungseinheit mindestens ein Hochdruck-Vorwärmer angeordnet, der zum Betrieb über eine Anzapfleitung an die Hochdruckturbine angeschlossen ist.

Bevorzugt weist der Rückverstromungskreislauf einen Anschluss für einen externen Wärmeabnehmer auf. Das System ermöglicht damit nicht nur die Wiedergewinnung von elektrischem Strom, sondern auch die Auskopplung von Wärmeenergie aus dem Rückverstromungskreislauf an externe Wärmeabnehmer. Das System kann so flexibel an die Bedürfnisse eines Nutzers angepasst werden, der einen Bedarf sowohl an Wärmeenergie als auch an elektrischer Energie hat.

Vorzugsweise wird bei einem erfindungsgemäßen System der (erste) Hochtemperatur-Wärmeübertrager so ausgelegt, dass die mittlere Temperaturdifferenz zwischen dem ersten Arbeitsmittel und dem Hochtemperatur-Wärmeträger in einem Bereich von 5 K bis 30 K und bevorzugt in einem Bereich von 8 K bis 12 K liegt. Durch diese Betriebsweise erhöht sich der Wirkungsgrad des Wärmeübertragers. Gemäß einer besonders bevorzugten Ausführungsform wird der HT-Wärmeübertrager auf mehrere Einheiten aufgeteilt, die entsprechend kleiner sind und mit kleineren mittleren Temperaturdifferenzen betrieben werden.

Nachfolgend wird die Erfindung anhand der Figuren beispielhaft noch näher beschrieben. Es zeigen:
- Figur 1: als Fließbild eine erste Ausführungsform eines erfindungsgemäßen Systems; und
- Figur 2: einen Ausschnitt aus Figur 1 mit einer zweiten Ausführungsform des Wärmepumpenkreislaufs und des Hochtemperatur-Wärmespeicher-kreislaufs.

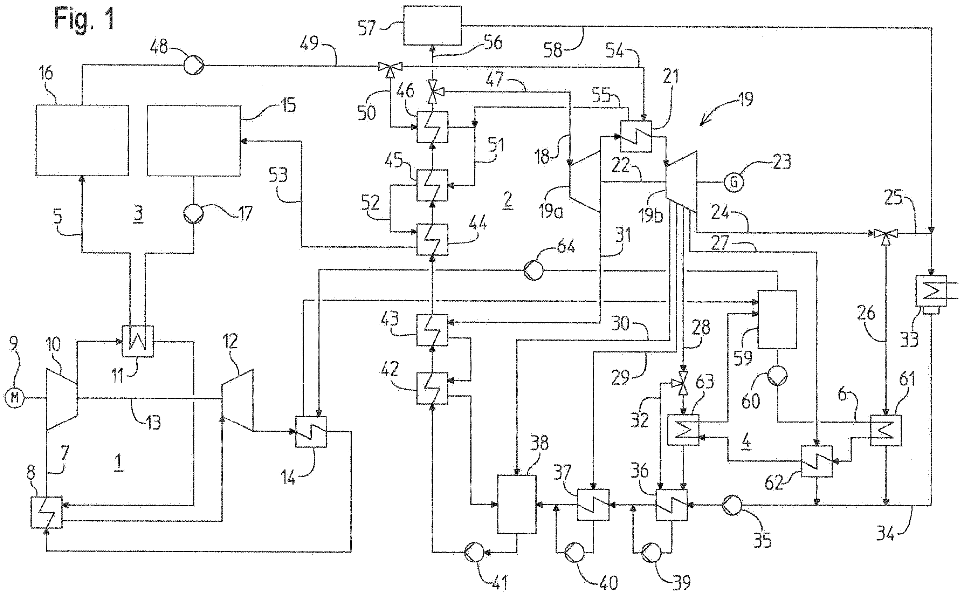

Das in Fig. 1 gezeigte System dient dazu, Energie in einem Beladevorgang einzuspeichern und zu einem späteren Zeitpunkt in einem Entladevorgang wieder zur Verfügung zu stellen. Das erfindungsgemäße System ist besonders geeignet zur Aufnahme von elektrischem Strom aus erneuerbaren Energiequellen oder von Überschussstrom aus dem Stromnetz. Es kann auch Wärmeenergie direkt oder indirekt über Wärmepumpen an verschiedenen Stellen des Systems eingekoppelt werden, wobei Wärme auch in Form von Kälte an Kältenutzer abgegeben werden kann.

Die Entladung des Systems kann ebenfalls über mehrere Wege erfolgen. Bevorzugt wird die Rückverstromung durch Erzeugen von Dampf, der eine Dampfturbine und einen Stromgenerator antreibt. Ein weiterer Nutzungsweg besteht darin, dass durch den erzeugten Dampf wenigstens teilweise Prozesswärme zur Verfügung gestellt wird. Eine direkte Nutzung der Wärmeenergie ist ebenfalls möglich.

Das System umfasst einen Wärmepumpenkreislauf 1 und einen Rückverstromungskreislauf 2. Beide Kreisläufe sind wärmetechnisch mit einem Hochtemperatur(HT)-Wärmespeicherkreislauf 3 und einem Niedertemperatur(NT)-Wärmespeicherkreislauf 4 gekoppelt. In dem HT-Wärmespeicherkreislauf 3 zirkuliert ein Hochtemperatur(HT)-Wärmeträger 5 und in dem NT-Wärmespeicherkreislauf 4 ein Niedertemperatur(NT)-Wärmeträger6. Die Begriffe "Hochtemperatur" und "Niedertemperatur" im Sinne dieser Erfindung bedeuten dabei, dass der gesamte Temperatur-Betriebsbereich des HT-Wärmespeicherkreislaufs 3 oberhalb desjenigen des NT-Wärmespeicherkreislaufs 4 liegt und dass es i.d.R. keine Überschneidungen gibt. Jeder Wärmespeicherkreislauf verfügt außerdem über Bereiche, in denen der jeweilige Wärmeträger "heiß" oder "kalt" ist. Diese Begriffe bedeuten im Sinne dieser Erfindung, dass innerhalb eines Wärmeträgerkreislaufs der "heiße" Wärmeträger eine höhere Temperatur als der "kalte" Wärmeträger aufweist. Die Begriffe "heiß" und "warm" und davon abgeleitete Begriffe werden im Rahmen dieser Veröffentlichung synonym verwendet. Die angegebenen Drücke sind Überdrücke.

Im Wärmepumpenkreislauf 1 wird während eines Beladevorgangs elektrische Energie in Wärmeenergie umgewandelt. Er ist ein geschlossener Kreislauf, in dem ein Arbeitsmittel 7 in einem Reverse-Brayton-Kreisprozess zirkuliert. Die Art des Arbeitsmittels 7 ist nicht besonders eingeschränkt, bevorzugt wird jedoch trockene Luft, CO2, Wasserdampf oder Helium, wobei trockene Luft als leicht verfügbares und kostengünstiges Arbeitsmittel besonders bevorzugt wird.

Das Arbeitsmittel 7 des Wärmepumpenkreislaufs 1 wird zunächst in einem Rekuperator 8 vorgewärmt. Dieser wird, wie auch alle übrigen Wärmeübertrager im gesamten System, bevorzugt im Gegenstrom betrieben. Die elektrische Energie wird dem Wärmepumpenkreislauf 1 durch einen Elektromotor 9 zugeführt, der einen Verdichter 10 antreibt. Der Verdichter 10 verdichtet das aus dem Rekuperator 8 strömende Arbeitsmittel 7, welches sich durch den Verdichtungsvorgang erwärmt. Das so erwärmte Arbeitsmittel 7 gibt seine Wärme in einem Hochtemperatur(HT)-Wärmeübertrager 11 an den HT-Wärmeträger 5 ab. Anschließend wird das Arbeitsmittel 7 durch den vorgenannten Rekuperator 8 geführt und erwärmt in diesem das in den Verdichter 10 strömende Arbeitsmittel 7. Dieses wird anschließend in einen Expander 12 geführt. Die dort wiedergewonnene mechanische Arbeit wird über eine Welle 13 an den Verdichter 10 übertragen. Sowohl Verdichter 10 als auch Expander 12 sind in dem dargestellten Beispiel einstufig ausgeführt, sie können jedoch einzeln oder beide auch mehrstufig ausgeführt werden.

Durch die Entspannung nimmt die Temperatur des Arbeitsmittels 7 ab. In einem mit dem NT-Wärmeträger 6 betriebenen Arbeitsmittel-Erwärmer 14 wird Wärme auf das Arbeitsmittel 7 übertragen und so in den Wärmepumpenkreislauf 1 eingekoppelt. Damit ist der Ausgangszustand des Kreisprozesses wiederhergestellt. Die Wärme kann auf unterschiedlichen Temperaturniveaus eingekoppelt werden. Über weitere, hier nicht dargestellte Wärmeübertrager ist es möglich, noch weitere Wärmen in den Wärmepumpenkreislauf einzukoppeln. Die eingetragene Wärme kann aus verschiedenen Quellen kommen, beispielsweise von Abwärmen aus Industrieprozessen oder aus einer oder mehreren Wärmepumpen.

In dem gezeigten Beispiel wird als Arbeitsmittel 7 trockene Luft verwendet. Dieses hat stromabwärts des Verdichters 10 einen Druck von 53 bar und eine Temperatur von 560°C. Nach der Wärmeübertragung im HT-Wärmeübertrager 11 kühlt sich das Arbeitsmittel 7 auf z.B. 308°C ab. Nach dem Durchgang durch Rekuperator 8 kühlt es auf 104°C ab. Im Expander 12 entspannt sich das Arbeitsmittel 7 auf einen Druck von 15 bar bei einer Temperatur von 2°C. Das System wird so ausgelegt, dass es bei der Entspannung im Expander 12 zu keiner Flüssigkeitsbildung kommt. Im Arbeitsmittel-Erwärmer 14 nimmt das Arbeitsmittel 7 wieder Wärme auf und hat nun eine Temperatur von 90°C. Weitere Wärme wird im Rekuperator 8 aufgenommen, wodurch die Temperatur auf 298°C steigt. In diesem Zustand tritt das Arbeitsmittel 7 dann in den Verdichter 10 ein.

Der HT-Wärmespeicherkreislauf 3 weist einen HT-Kaltspeicher 15 zum Speichern des kalten HT-Wärmeträgers 5 und einen HT-Heißspeicher 16 zum Speichern des heißen HT-Wärmeträgers 5 auf. Die Art des HT-Wärmeträgers 5 ist nicht besonders beschränkt, jedoch sind Salzschmelzen bevorzugt, z.B. Solarsalz, welches aus einer Mischung von 60 Gew.-% Natriumnitrat und 40% Gew.-% Kaliumnitrat besteht. Dieses Salz hat einen großen Temperatur-Arbeitsbereich zwischen 290°C und 570°C, eine hohe thermische Beständigkeit und den Vorteil eines drucklosen Betriebs. Das Wärmespeichermedium des HT-Wärmespeichers 16 und optional des HT-Kaltspeichers 15 kann aus dem HT-Wärmeträger 5 selbst bestehen oder zusätzlich noch aus festen Wärmespeichermedien wie Gestein, Keramik, Beton oder aus Phasenänderungsmaterialien. Der HT-Wärmespeicherkreislauf 3 bildet bevorzugt einen geschlossenen Kreislauf. Während des Beladevorgangs wird der HT-Wärmeträger 5 vom HT-Kaltspeicher 15 mit einer Pumpe 17 durch den HT-Wärmeübertrager 11 gefördert, wo er Wärme vom Arbeitsmittel 7 des Wärmepumpenkreislaufs 1 aufnimmt und anschließend in den HT-Heißspeicher 16 geleitet wird. Der HT-Wärmeübertrager 11 koppelt somit den Wärmepumpenkreislauf 1 mit dem HT-Wärmespeicherkreislauf 3. Der HT-Wärmeträger 5 kann zusätzlich noch dadurch aufgeheizt werden, indem er Wärme über separate, hier nicht gezeigte Leitungen, von externen Wärmequellen aufnimmt, wie z.B. von thermischen Solarkraftwerken, elektrischen Heizern oder von Abwärmen anderer Prozesse.

Der HT-Wärmeträger 5 hat in einer bevorzugten Ausführungsform im HT-Kalttank 15 eine Temperatur von 298°C und wird während des Beladevorgangs im HT-Wärmeübertrager 14 auf 550°C erhitzt. Der HT-Wärmeübertrager 11 wird so ausgelegt, dass die mittlere Temperaturdifferenz zwischen Arbeitsmittel 7 und HT-Wärmeträger 5 bevorzugt in einem Bereich von 5 K bis 30 K und besonders bevorzugt in einem Bereich von 8 K bis 12 K liegt.

Der Rückverstromungskreislauf 2 bildet den Entladevorgang, bei dem die im HT-Wärmespeicherkreislauf 3 gespeicherte thermische Energie wieder zurück in elektrischen Strom gewandelt wird. Die thermische Energie wird dabei an mehreren Stellen in den Rückverstromungskreislauf 2 eingekoppelt. Der Rückverstromungskreislauf 2 steht weiterhin in Verbindung mit einem NT-Wärmespeicherkreislauf 4, mit dem die Restwärme des Rückverstromungskreislaufs 2 gespeichert wird und während des Beladevorgangs wieder an den Wärmepumpenkreislauf 1 zurückgegeben wird. Auch diese Wärmeübertragung vom Rückverstromungskreislauf 2 an den NT-Wärmespeicherkreislauf 4 erfolgt an mehreren Stellen.

Im Rückverstromungskreislauf 2 zirkuliert ein zweites Arbeitsmittel 18. Bevorzugt wird hier Wasser/Wasserdampf verwendet. Daher wird das hier angegebene Ausführungsbeispiel eines Rückverstromungskreislaufs 2 anhand von Wasser/Wasserdampf als zweitem Arbeitsmittel 18 beschrieben.

Das zweite Arbeitsmittel 18 durchläuft die Aggregatzustände flüssig, verdampft, kondensiert.

Entsprechend ist in dem hier beschriebenen Ausführungsbeispiel von Wasser 18 oder Speisewasser 18 im flüssigen Aggregatzustand, von Dampf 18 oder Wasserdampf 18 oder Frischdampf 18 im verdampften Aggregatzustand und von Kondensat 18 im kondensierten Aggregatzustand die Rede.

Im Rückverstromungskreislauf 2 befindet sich eine Dampfturbineneinheit 19. Diese ist hier optional zweiteilig mit einer Hochdruck(HD)-Turbine 19a und mit einer Mitteldruck-Niederdruck (MD/ND)-Turbine 19b ausgeführt. Dazwischen ist ein Zwischenüberhitzer 21 angeordnet. Die HD-Turbine 19a und die MD/ND-Turbine 19b sind mit einer gemeinsamen Welle 22 gekoppelt, die einen Generator 23 zur Erzeugung von elektrischem Strom antreibt. Der entspannte Dampf 18 verlässt die MD/ND-Turbine 19b über Leitung 24, die sich in Leitung 25 und Leitung 26 verzweigt. An die MD/ND-Turbine 19b sind eine erste Anzapfleitung 27, eine zweite Anzapfleitung 28, eine dritte Anzapfleitung 29 und eine vierte Anzapfleitung 30 angeschlossen, von der HD-Turbine 19a gibt es einen Abzweig 31. Von der zweiten Anzapfleitung 28 gibt es außerdem einen Abzweig 32. Die Anzapfleitungen können mit hier nicht dargestellten Regelarmaturen ausgestattet sein.

Der aus der MD/ND-Turbine 19b austretende Dampf 18 wird über Leitungen 24 und 25 in einem Kondensator kondensiert. Dieser kann mit verschiedenen Kühlmitteln gekühlt werden, beispielsweise mit Luft, Flusswasser oder mit Seewasser. In diesem Beispiel ist der Kondensator als Luftkondensator 33 ausgeführt. Die als Kühlmittel dienende Luft wird dabei an die Umgebung abgegeben. Alternativ kann der Luftkondensator 33 seine Wärme an eine hier nicht dargestellte Wärmepumpe abgeben, die Wärme auf einem höheren Temperaturniveau über eigene Wärmespeicher in den Wärmepumpenkreislauf 1 einkoppelt. Dabei kann das Arbeitsmittel auch ein anderes sein als Luft. Zur energetischen Optimierung des Rückverstromungskreislaufs 2 wird eine regenerative Speisewasservorwärmung vorgesehen. Hierzu wird das aus dem Luftkondensator 33 austretende Kondensat 18 mit einer Kondensatleitung 34 und mit einer Kondensatpumpe 35 durch einen ersten Niederdruck(ND)-Vorwärmer 36 und einen zweiten Niederdruck(ND)-Vorwärmer 37 in einen Speisewassertank 38 gefördert. Die ND-Vorwärmer 36 und 37 sind als Kondensatoren ausgeführt, in denen Dampf 18 aus den Anzapfleitungen 32 bzw. 29 kondensiert und über eigene Kondensatpumpen 39 und 40 in den Kondensatstrom stromabwärts des jeweiligen ND-Vorwärmers gefördert wird. Oftmals werden noch weitere ND-Vorwärmer vorgesehen, die hier jedoch nicht dargestellt sind.

Das Speisewasser 18 wird mit einer Hochdruck(HD)-Speisewasserpumpe 41 vom Speisewassertank 38 nacheinander durch einen ersten Hochdruck(HD)-Vorwärmer42, einen zweiten Hochdruck(HD)-Vorwärmer 43, einen Hochtemperatur(HT)-Vorwärmer 44, einen Dampferzeuger 45 und einen Überhitzer 46 gefördert. Der so in mehreren Schritten erzeugte Frischdampf 18 wird über eine Frischdampfleitung 47 zur Hochdruckturbine 19a geführt. Hier nicht gezeigt sind vorteilhafte Verbindungsleitungen zwischen einzelnen Apparaten. So kann der Dampferzeuger 45 noch über eine Dampftrommel verfügen, dessen abgetrenntes Wasser 18 in den HT-Vorwärmer 44 zurückgeführt wird.

Zum Betrieb der HD-Vorwärmer 42 und 43 wird der zweite HD-Vorwärmer 43 mit Dampf 18 aus der an die Hochdruckturbine 19a angeschlossenen Anzapfleitung 31 betrieben. Der aus dem zweiten HD-Vorwärmer 43 austretende Dampf 18 wird dem ersten HD-Vorwärmer 42 zugeführt. Der dort abgekühlte Dampf 18 wird in den Speisewassertank 38 geführt und dort kondensiert. Das Wasser 18 im Speisewassertank 38 wird außerdem durch Dampf 18 aus der an die MD/ND-Turbine 19b angeschlossenen Anzapfleitung 30 weiter erwärmt.

Der HT-Wärmespeicherkreislauf 3 ist mit dem Rückverstromungskreislauf 2 über die Dampferzeugung gekoppelt. Hierzu wird mit einer Pumpe 48 der HT-Wärmeträger 5 von HT-Heißtank 16 nacheinander durch Leitung 49 und Leitung 50 zum Überhitzer46, durch Leitung 51 zum Dampferzeuger 45 und durch Leitung 52 zum HT-Vorwärmer 44 geführt, wobei der HT-Wärmeträger 5 schrittweise seine Wärme an den Wasserdampf 18 bzw. an das Wasser 18 abgibt. Schließlich wird der kalte HT-Wärmeträger 5 durch Leitung 53 wieder zum HT-Kalttank 15 zurückgeführt. Optional wird ein Teilstrom des HT-Wärmeträgers 5 durch Leitung 54 zu einem Zwischenüberhitzer 21 zwischen Hochdruckturbine 19a und MD/ND-Turbine 19b geführt, wo er den aus HD-Turbine 19a strömenden und abgekühlten Dampf 18 wieder erwärmt. Die Restwärme des aus dem Zwischenüberhitzer 21 austretenden HT-Wärmeträgers 5 wird weiter genutzt, indem der HT-Wärmeträger 5 zur Dampferzeugung geführt wird, z.B. über Leitung 55 zur Leitung 51 zwischen Überhitzer 46 und Dampferzeuger 45.

Der im Überhitzer 46 erzeugte Dampf 18 wird vorzugsweise durch Leitung 47 zur Erzeugung von elektrischem Strom der Dampfturbineneinheit 19 zugeführt. Daneben ist es jedoch auch möglich, den Dampf 18 zumindest teilweise über Leitung 56 einem externen Wärmeabnehmer 57 als Prozesswärme zuzuführen. Nach der Nutzung liegt der Dampf 18 in Abhängigkeit vom Druck und der Temperatur als Dampf 18, Kondensat 18 oder einer Mischung von beiden vor, der an geeigneter Stelle in den Rückverstromungskreislauf 2 zurückgegeben werden kann, beispielsweise über Leitung 58 zum Luftkondensator 33, wenn der abgegebene Dampf 18 als Sattdampf vorliegt.

In einer bevorzugten Ausführungsform beträgt die Temperatur des Wasserdampfes 18 543°C am Eintritt in die HD-Turbine 19a bei einem Druck von 141 bar. Am Austritt aus der HD-Turbine 19a hat sich der Druck auf 31 bar entspannt bei einer Temperatur von 330°C. In dem Zwischenüberhitzer 21 wird der Wasserdampf 18 wieder nahezu auf die Anfangstemperatur gebracht, bevor er in der MD/ND-Turbine 19b auf nahezu Umgebungsdruck bei 40°C entspannt wird. An dieser Stelle liegt der Wasserdampf 18 als Nassdampf vor, der schon teilweise kondensiert ist.

Dieser Nassdampf 18 wird im Luftkondensator 33 kondensiert. Mit einer Kondensatpumpe 35 wird das Kondensat 18 durch ND-Vorwärmer 36 und 37 geführt, wobei die Temperatur schrittweise auf 126°C erhöht wird, bevor das Kondensat 18 als Speisewasser in den Speisewassertank 38 geleitet wird.

An die MD/ND-Turbine 19b sind entlang des Strömungswegs mehrere Anzapfleitungen angeschlossen. Davon führt die Anzapfleitung 28 einen Dampf 18 mit 128°C und einem Druck von 1,9 bar über Abzweig 32 zum ND-Vorwärmer 36. Die Anzapfleitung 29 führt einen Dampf 18 mit 216°C und 2,4 bar zum zweiten ND-Vorwärmer 37. Eine weitere Anzapfleitung 30 führt Dampf 18 mit 224°C und 6,8 bar in den Speisewassertank 38, wo er mit seiner Kondensationswärme das Speisewasser 18 erwärmt. Eine HD-Speisewasserpumpe 41 fördert das im Speisewassertank 38 auf 164°C erwärmte Wasser 18 mit einem Druck von 144 bar durch den ersten HD-Vorwärmer 42, wobei die Temperatur auf 206°C steigt. In dem zweiten HD-Vorwärmer 43 steigt die Temperatur weiter auf 238°C. Der zweite HD-Vorwärmer 43 wird durch Dampf 18 aus einer HD-Dampfleitung 31 betrieben, die an den Austritt der HD-Turbine 19a angeschlossen ist. Der Dampf 18 aus HD-Dampfleitung 31 hat eine Temperatur von 331°C und einen Druck von 32 bar. Nach Durchgang von HD-Vorwärmer 43 wird er durch HD-Vorwärmer 42 geführt, bevor er mit einer Temperatur von 172°C und einem Druck von 16 bar nach einer hier nicht gezeigten Drosselung in den Speisewassertank 38 geführt wird.

Nach Austritt des Speisewassers 18 aus dem HD-Vorwärmer 43 wird der Dampf 18 in mehreren Stufen in mit dem HT-Wärmeträger 5 betriebenen Wärmeüberträgern 44, 45 46 erzeugt. In einem ersten Schritt wird das Wasser 18 in dem HT-Vorwärmer 44 auf 335°C erwärmt, in einem zweiten Schritt wird es in dem Dampferzeuger 45 verdampft. Der daraus austretende Dampf 18 hat eine Temperatur von 338°C. Dieser Dampf 18 wird schließlich in dem Überhitzer 46 auf 543°C bei 141 bar erhitzt und anschließend bevorzugt über Frischdampfleitung 47 der HD-Turbine 19a zugeführt.

Der HT-Wärmeträger 5 zum Betrieb der Apparate 44, 45, 46 zur Dampferzeugung wird in umgekehrter Reihenfolge durch diese geleitet. Zunächst wird er mit der Pumpe 48 durch den Überhitzer 46 gefördert, wobei er von 550°C auf 407°C abkühlt. Durch Wärmeabgabe im Verdampfer 45 kühlt er auf 343°C ab und am Austritt des HT-Vorwärmers 44 hat er eine Temperatur von 298°C. Anschließend wird der HT-Wärmeträger 5 in den HT-Kalttank 15 zurückgeführt. In einer bevorzugten Ausführungsform wird ein Teil des HT-Wärmeträgers 5 von Leitung 49 in Leitung 54 abgezweigt und in den Zwischenüberhitzer 21 geführt, wo er den aus der HD-Turbine 19a kommenden Dampf 18 wieder aufheizt. Der HT-Wärmeträger 5 ist nun auf 471°C abgekühlt und wird mit dem aus Überhitzer 46 kommenden HT-Wärmeträger 5 zusammengeführt.

Der NT-Wärmespeicherkreislauf 4 bildet das zweite Bindeglied zwischen dem Rückverstromungskreislauf 2 und dem Wärmepumpenkreislauf 1. Während des Entladevorgangs des HT-Wärmespeicherkreislaufs 3 wird umgekehrt der NT-Wärmespeicherkreislauf 4 mit Wärme beladen. Bei der nachfolgenden Beschreibung des NT-Wärmespeicherkreislaufs 4 bedeutet "Beladevorgang" somit das Aufnehmen von Restwärme aus dem Rückverstromungskreislauf 2 und "Entladevorgang" das Abgeben von Wärme an den Wärmepumpenkreislauf 1. Die beiden Vorgänge laufen entsprechend wie beim Wärmepumpenkreislauf 1 zeitversetzt ab. Die Art des NT-Wärmeträgers 6, d. h. des Arbeitsmittels des NT-Wärmespeicherkreislaufs, ist nicht grundsätzlich beschränkt. Zur Anwendung kann z.B. Wasser kommen oder Wasser mit Zusätzen, welche den flüssigen Arbeitsbereich verändern, beispielsweise wässrige Salzlösungen. Als NT-Wärmeträger und NT-Wärmespeicher wird jedoch Wasser bevorzugt. Im Folgenden wird nur noch dieses Arbeitsmittel im Rahmen des hier beschriebenen Ausführungsbeispiels berücksichtigt.

Während des Beladevorgangs des NT-Wärmespeicherkreislaufs 4 wird in einem ersten Schritt Wasser 6 aus dem kalten Bereich eines Schichtspeichertanks 59 durch eine Kaltwasserpumpe 60 in einen ersten Kondensator 61 geführt, wo es durch den kondensierenden Dampf 18 aus der Anzapfleitung 26 erwärmt wird. Das im ersten Kondensator 61 erwärmte Wasser 6 wird einem zweiten Kondensator 62 zugeführt, wo es weitere Wärme aus dem kondensierenden Dampf 18 der Anzapfleitung 27 aufnimmt. In einem weiteren Schritt wird das im zweiten Kondensator 62 erwärmte Wasser einem dritten Kondensator 63 zugeführt, der durch kondensierenden Dampf 18 aus der Anzapfleitung 28 beheizt wird. Das aus dem dritten Kondensator 63 austretende Wasser 6 wird abschließend in einen heißen Bereich des Schichtspeichertanks 59 zurückgeführt. Das Kondensat 18 der Kondensatoren 61 und 62 wird in die vom Luftkühler 33 kommende Kondensatleitung 34 geleitet, das Kondensat 18 des dritten Kondensators 63 wird in den ersten Niederdruckvorwärmer 36 geführt.

Beim Entladevorgang des NT-Wärmespeicherkreislaufs 4 wird heißes Wasser 6 aus dem Schichtspeichertank 59 mit einer Heißwasserpumpe 64 durch den Arbeitsmittel-Erwärmer 14 geführt, wo es seine Wärme an das Arbeitsmittel 7 des Wärmepumpenkreislaufs 1 abgibt. Das abgekühlte Wasser 6 wird anschließend in einen kalten Bereich des Schichtspeichertanks 59 zurückgeführt.

Der NT-Wärmespeicherkreislauf 4 zur Aufnahme von Restwärme aus dem Rückverstromungskreislauf 2 ist besonders vorteilhaft an Standorten, wo keine Hochtemperaturwärmequelle für den Wärmepumpenkreislauf 1 zur Verfügung steht. Das erhöhte Temperaturniveau der Wärmezufuhr erhöht die Leistungszahl des Wärmepumpenkreislaufs 1. Durch die Verwendung eines Schichtspeichers als Behältertyp werden Investitionskosten gesenkt.

In einer bevorzugten Ausführungsform beträgt die Temperatur des NT-Wärmeträgers Wasser 6 im kalten Bereich des Schichtspeichertanks 59 10°C. Der Tank wird bevorzugt unter Atmosphärendruck betrieben. Im ersten Kondensator 61 wird das Wasser 6 auf 35°C erwärmt, im zweiten Kondensator 62 auf 69°C und im dritten Kondensator 63 schließlich auf eine Endtemperatur dicht unterhalb der Siedetemperatur, hier auf 95°C. Das so erwärmte Wasser 6 wird in den heißen Bereich des Schichtspeichertanks 59 geführt. Da heißes Wasser eine geringere Dichte hat als kaltes Wasser, befindet sich der Speicherbereich für warmen NT-Wärmeträger im oberen Bereich des Schichtspeichertanks 59 und der Speicherbereich für kalten NT-Wärmeträger im unteren Bereich.

Während des Entladevorgangs fördert die Heißwasserpumpe 64 heißes Wasser 6 aus dem Schichtspeichertank 59 in den Arbeitsmittel-Erwärmer 14, mit welchem der NT-Wärmespeicherkreislauf 4 mit dem Wärmepumpenkreislauf 1 gekoppelt ist. In dem Arbeitsmittel-Erwärmer 14 kühlt das Wasser auf 10°C ab und wird in den kalten Bereich des Schichtspeichertanks 59 zurückgeführt.

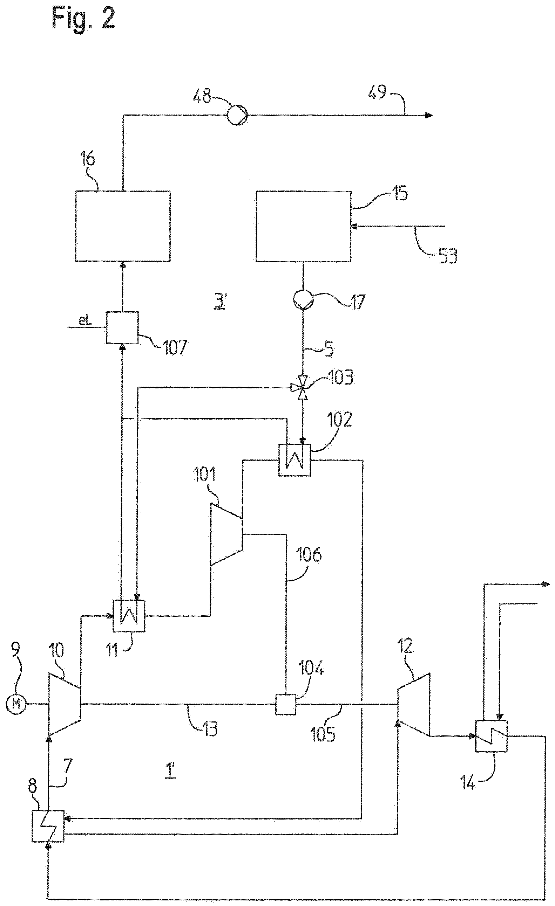

In Figur 2 ist eine zweite Ausführungsform 1', 3' des Wärmepumpenkreislaufs 1 und des HT-Wärmespeicherkreislaufs 3 aus Figur 1 dargestellt mit einer mehrteiligen Erwärmung von Arbeitsmittel 7 und HT-Wärmeträger 5.

In bekannter Weise verdichtet Verdichter 10 das Arbeitsmittel 7, wobei sich dieses erwärmt. Die erzeugte Wärme wird im (ersten) HT-Wärmeübertrager 11 an den HT-Wärmeträger 5 abgegeben. Das dort abgekühlte Arbeitsmittel 7 wird in einen zweiten Verdichter 101 geführt. Das damit verdichtete und erwärmte Arbeitsmittel 7 gibt seine Wärme in einem zweiten HT-Wärmeübertrager 102 ab und wird in bekannter Weise zum Rekuperator 8 geführt. Auf der Seite des HT-Wärmespeicherkreislaufs 3 sind die HT-Wärmeübertrager 11 und 102 zueinander parallelgeschaltet. Der vom HT-Kaltspeicher 15 kommende HT-Wärmeträger 5 wird dabei mit einem Dreiwegeventil 103 auf die HT-Wärmeübertrager 11 und 102 aufgeteilt. Das Dreiwegeventil 103 kann auch durch jeweils eine Regelarmatur in den Zulaufleitungen zu den HT-Wärmeübertragern 11 und 102 ersetzt werden. Nach dem Durchlaufen dieser Wärmeübertrager wird der HT-Wärmeträger 5 zum HT-Heißspeicher 16 geführt. An die hier gezeigte zusätzliche Kombination, mit dem zweiten Verdichter 101 und dem zweiten HT-Wärmeübertrager 102, können sich noch weitere entsprechende Verdichter-Wärmeübertrager-Kombinationen anschließen, die hier jedoch nicht gezeigt sind. Alternativ ist auch eine hier nicht gezeigte serielle Verschaltung der HT-Wärmeübertrager 11 und 102 möglich.

Vom Verdichter 10 führt eine Welle 13 zu einem Getriebe 104. Daran angeschlossen ist eine Welle 105, durch die mechanische Arbeit vom Expander 12 eingetragen wird. Am selben Getriebe 104 ist weiterhin eine Welle 106 angeschossen, die den Verdichter 101 antreibt. Entsprechend können noch weitere Verdichter angeschlossen werden. Bevorzugt werden mehrere Verdichter und auch Expander in einem gemeinsamen Getriebegehäuse angeordnet. Solche Zusammenstellungen sind unter dem Begriff "Getriebeverdichter" bekannt und kommerziell erhältlich.

Zur Entlastung des Wärmepumpenkreislaufs 1 kann stromaufwärts des HT-Heißspeichers 16 ein elektrischer Heizer 107 angeordnet werden. Hierdurch verringern sich die Anforderungen an die Temperaturbeständigkeit der stromaufwärtigen Teile im Wärmepumpenkreislauf 1. Anderseits verringert sich dadurch der Wirkungsgrad des Gesamtsystems.

Die Strömungswege sind wie folgt: Im ersten Verdichter 10 wird das erste Arbeitsmittel 7 z.B. auf 40 bar verdichtet, wodurch es sich auf 450°C erwärmt. In dem ersten HT-Wärmeübertrager 11 wird Wärme an den HT-Wärmeträger 5 abgegeben. Anschließend wird das auf z.B. 273°C abgekühlte erste Arbeitsmittel 7 mit dem zweiten Verdichter 101 auf 98 bar verdichtet, wodurch es sich wieder auf 450°C erwärmt. In dem zweiten HT-Wärmeübertrager 102 wird Wärme an den HT-Wärmeträger 5 abgegeben. Die abschließende Erwärmung des HT-Wärmeträgers 5 auf die für den HT-Heißspeicher 16 vorgegebene Solltemperatur erfolgt durch den elektrischen Heizer 107.

Die dargestellten Ausführungsbeispiele sind bevorzugte Ausführungsformen. Sie sind nicht als einschränkend bezüglich geeigneter Ausgestaltungen anzusehen. Weiterhin sind dort nur die wesentlichen Merkmale der Erfindung dargestellt. Sie werden in bekannter Weise ausgestaltet durch für solche Anlagen übliche Ausstattungsmerkmale wie Armaturen, Isolierungen, MSR-Technik, Sicherheitseinrichtungen oder Vorrichtungen zum Einfüllen des Arbeitsmittels in den Wärmepumpenkreislauf.

### Kürzel- und Positionsnummernliste

- HT: Hochtemperatur
- NT: Niedertemperatur
- HD: Hochdruck
- MD: Mitteldruck
- ND: Niederdruck

- 1: Wärmepumpenkreislauf
- 2: Rückverstromungskreislauf
- 3: HT-Wärmespeicherkreislauf
- 4: NT-Wärmespeicherkreislauf
- 5: HT-Wärmeträger
- 6: NT-Wärmeträger
- 7: (erstes) Arbeitsmittel
- 8: Rekuperator
- 9: Elektromotor
- 10: (erster) Verdichter
- 11: (erster) HT-Wärmeübertrager
- 12: Expander
- 13: (erste) Welle
- 14: Arbeitsmittel-Erwärmer
- 15: HT-Kaltspeicher
- 16: HT-Heißspeicher
- 17: Pumpe für HT-Wärmeträger aus HT-Kaltspeicher
- 18: zweites Arbeitsmittel
- 19: Dampfturbineneinheit
- 19a: HD-Turbine
- 19b: MD/ND-Turbine
- 21: Zwischenüberhitzer
- 22: Welle der Dampfturbine
- 23: Generator
- 24: Austrittsleitung aus MD-Turbine
- 25: Leitung zum Luftkondensator
- 26: Abzweig-ND-Dampfleitung
- 27: erste Anzapfleitung
- 28: zweite Anzapfleitung
- 29: dritte Anzapfleitung
- 30: vierte Anzapfleitung
- 31: Abzweig HD-Dampfleitung
- 32: Abzweig von zweiter Anzapfleitung
- 33: Luftkondensator
- 34: Kondensatleitung
- 35: Kondensatpumpe
- 36: erster ND-Vorwärmer
- 37: zweiter ND-Vorwärmer
- 38: Speisewassertank
- 39: Kondensatpumpe von erstem ND-Vorwärmer
- 40: Kondensatpumpe von zweitem ND-Vorwärmer
- 41: HD-Speisewasserpumpe
- 42: erster HD-Vorwärmer
- 43: zweiter HD-Vorwärmer
- 44: HT-Vorwärmer
- 45: Dampferzeuger
- 46: Überhitzer
- 47: Frischdampfleitung
- 48: Pumpe für HT-Wärmeträger aus HT-Heißtank
- 49: Leitung für HT-Wärmeträger von HT-Pumpe
- 50: Leitung für HT-Wärmeträger zum Überhitzer
- 51: Leitung für HT-Wärmeträger vom Überhitzer zum Dampferzeuger
- 52: Leitung für HT-Wärmeträger vom Dampferzeuger zum HT-Vorwärmer
- 53: Leitung für HT-Wärmeträger vom HT-Vorwärmer zum HT-Kalttank
- 54: Leitung für HT-Wärmeträger zum Zwischenüberhitzer
- 55: Leitung für HT-Wärmeträger vom Zwischenüberhitzer zum Dampferzeuger
- 56: Dampfleitung zu externem Wärmeabnehmer
- 57: externer Wärmeabnehmer
- 58: Rücklaufleitung von genutztem Dampf von externem Wärmenutzer
- 59: Schichtspeichertank
- 60: Kaltwasserpumpe
- 61: NT-Wärmeübertrager (erster Kondensator)
- 62: zweiter Kondensator
- 63: dritter Kondensator
- 64: Heißwasserpumpe

- 1': Wärmepumpenkreislauf, weiteres Ausführungsbeispiel
- 3': HT-Wärmespeicherkreislauf, weiteres Ausführungsbeispiel
- 101: zweiter Verdichter
- 102: zweiter HT-Wärmeübertrager
- 103: Dreiwegeventil
- 104: Getriebe
- 105: Welle zwischen Expander und Getriebe
- 106: Welle zum zweiten Verdichter
- 107: elektrischer Heizer

## Patentansprüche

1. System zur Speicherung und Abgabe von elektrischer Energie mit deren Speicherung als Wärmeenergie, aufweisend:
• einen Wärmepumpenkreislauf (1) mit
∘ einem im Kreis strömenden ersten Arbeitsmittel (7) und
∘ einem Verdichter (10) mit einem Elektromotor (9),
• einen Hochtemperatur-Wärmespeicherkreislauf (3) mit
o einem im Kreis strömenden Hochtemperatur-Wärmeträger (5),
wobei der Wärmepumpenkreislauf (1) und der Hochtemperatur-Wärmespeicherkreislauf (3) an einen Hochtemperatur-Wärmeübertrager (11) angeschlossen sind zum Übertragen von Wärme vom ersten Arbeitsmittel (7) auf den Hochtemperatur-Wärmeträger (5),
• einen Rückverstromungskreislauf (2) mit
o einem im Kreis strömenden zweiten Arbeitsmittel (18),
wobei der Hochtemperatur-Wärmespeicherkreislauf (3) und der Rückverstromungskreislauf (2) an eine Dampferzeugungseinheit (44, 45, 46) angeschlossen sind zum Übertragen von Wärme vom Hochtemperatur-Wärmeträger (5) auf das zweite Arbeitsmittel (18),
und mit
o einer Dampfturbineneinheit (19) mit Stromgenerator (23), die stromabwärts der Dampferzeugungseinheit (44, 45 ,46) angeordnet ist,
• einen Niedertemperatur-Wärmespeicherkreislauf (4) mit
o einem im Kreis strömenden Niedertemperatur-Wärmeträger (6),
wobei der Rückverstromungskreislauf (2) und der Niedertemperatur-Wärmespeicherkreislauf (4) an einen Niedertemperatur-Wärmeübertrager (61) angeschlossen sind zum Übertragen von Wärme vom zweiten Arbeitsmittel (18) auf den Niedertemperatur-Wärmeträger (6), und
wobei der Niedertemperatur-Wärmespeicherkreislauf (4) und der Wärmepumpenkreislauf (1) an einen Arbeitsmittel-Erwärmer (14) angeschlossen sind zum Übertragen von Wärme vom Niedertemperatur-Wärmeträger (6) auf das erste Arbeitsmittel (7),
wobei der Niedertemperatur-Wärmeübertrager (61) als erster Kondensator ausgebildet ist und im Rückverstromungskreislauf (2) sein Eintritt an den Austritt der Dampfturbineneinheit (19) und/oder an eine Anzapfleitung (27) an der Dampfturbineneinheit (19) an einer Stelle zwischen deren Eintritt und Austritt angeschlossen ist, **dadurch gekennzeichnet, dass** das System derart ausgelegt ist, dass
die Dampfturbineneinheit (19) eine Hochdruckturbine (19a) und eine Mitteldruck/Niederdruckturbine (19b) aufweist und zwischen der Hochdruckturbine (19a) und der Mitteldruck/Niederdruckturbine (19b) ein Zwischenüberhitzer (21) angeordnet ist, wobei ein Teil des Hochtemperatur-Wärmeträgerstroms (5) vor Eintritt in die Dampferzeugungseinheit (44, 45, 46) durch den Zwischenüberhitzer (21) strömt.

2. System nach Anspruch 1, **dadurch gekennzeichnet, dass** der Wärmepumpenkreislauf (1) ferner einen Rekuperator (8) und einen Expander (12) aufweist und das erste Arbeitsmittel (7) nacheinander den Verdichter (10), den Hochtemperatur-Wärmeübertrager (11), den Rekuperator (8), den Expander (12), den Arbeitsmittel-Erwärmer (14) und wieder den Rekuperator (8) durchströmt.

3. System nach Anspruch 1 oder 2, **dadurch gekennzeichnet, dass** der Hochtemperatur-Wärmespeicherkreislauf (3) ferner einen Hochtemperatur-Kaltspeicher (15) und einen Hochtemperatur-Heißspeicher (16) aufweist und der Hochtemperatur-Wärmeträger (5) nacheinander den Hochtemperatur-Kaltspeicher (15), den Hochtemperatur-Wärmeübertrager (11), den Hochtemperatur-Heißspeicher (16) und die Dampferzeugungseinheit (44, 45, 46) durchströmt.

4. System nach einem der vorhergehenden Ansprüche, **dadurch gekennzeichnet, dass**
- der Wärmepumpenkreislauf (1') einen zweiten Verdichter (101) aufweist und
- der Wärmepumpenkreislauf (1') und der Hochtemperatur-Wärmespeicherkreislauf (3) an einen zweiten Hochtemperatur-Wärmeübertrager (102) angeschlossen sind zum Übertragen von Wärme vom ersten Arbeitsmittel (7) auf den Hochtemperatur-Wärmeträger (5),
- wobei im Wärmepumpenkreislauf (1') der zweite Verdichter (101) stromabwärts des (ersten) Hochtemperatur-Wärmeübertragers (11) und der zweite Hochtemperatur-Wärmeübertrager (102) stromabwärts des zweiten Verdichters (101) angeordnet ist, und
- wobei im Hochtemperatur-Wärmespeicherkreislauf (3') der zweite Hochtemperatur-Wärmeübertrager (102) parallel zum Hochtemperatur-Wärmeübertrager (11) zuschaltbar ist.

5. System nach Ansprüche 2 und 4, **dadurch gekennzeichnet, dass** der Verdichter (10), der Expander (12) und der zweite Verdichter (101) über ein gemeinsames Getriebe (104) mechanisch miteinander gekoppelt sind.

6. System nach einem der vorhergehenden Ansprüche, **dadurch gekennzeichnet, dass** im Hochtemperatur-Wärmespeicherkreislauf (3) zwischen dem/den Hochtemperatur-Wärmeübertrager/n (11, 102) und dem Hochtemperatur-Heißspeicher (16) ein elektrischer Heizer (107) angeordnet ist.

7. System nach einem der vorhergehenden Ansprüche, **dadurch gekennzeichnet, dass** die Dampferzeugungseinheit (44, 45, 46) einen Hochtemperatur-Vorwärmer (44), einen Dampferzeuger (45) und einen Überhitzer (46) aufweist, die das zweite Arbeitsmittel (18) in dieser Reihenfolge und der Hochtemperatur-Wärmeträger (5) im Gegenstrom durchströmt.

8. System nach einem der vorhergehenden Ansprüche, **dadurch gekennzeichnet, dass** der Niedertemperatur-Wärmespeicherkreislauf (4) mindestens einen weiteren Kondensator (62, 63) stromabwärts des ersten Kondensators (61) aufweist, wobei alle diese Kondensatoren (61, 62, 63) im Rückverstromungskreislauf (2) zueinander parallelgeschaltet sind und im Niedertemperatur-Wärmespeicherkreislauf (4) stromabwärts hintereinander angeordnete weitere Kondensatoren (62, 63) jeweils an eine Anzapfleitung (27, 28) der Dampfturbineneinheit (19) an Stellen zwischen deren Eintritt und Austritt angeschlossen sind, die im Rückverstromungskreislauf (2) stromaufwärts hintereinander angeordnet sind.

9. System nach Anspruch 8, **dadurch gekennzeichnet, dass** der Niedertemperatur-Wärmespeicherkreislauf (4) stromabwärts eines letzten Kondensators (61, 62, 63) eine Speichereinrichtung (59) für den Niedertemperatur-Wärmeträger aufweist, mit einem Speicherbereich für kalten Niedertemperatur-Wärmeträger (6) und einem Speicherbereich für warmen Niedertemperatur-Wärmeträger (6), wobei
- der Eintritt des ersten Kondensators (61) an den Speicherbereich für kalten Niedertemperatur-Wärmeträger (6) und der Austritt des letzten Kondensators (61, 62, 63) an den Speicherbereich für warmen Niedertemperatur-Wärmeträger (6) angeschlossen ist, und
- der Arbeitsmittel-Erwärmer (14) an den Speicherbereich für warmen Niedertemperatur-Wärmeträger (6) angeschlossen ist.

10. System nach Anspruch 8 oder 9, **dadurch gekennzeichnet, dass** der Rückverstromungskreislauf (2) mindestens einen Niederdruck-Vorwärmer (36, 37) aufweist, der stromabwärts parallelgeschalteter Kondensatoren (61, 62) angeordnet und an eine der Anzapfleitungen (28, 29) der Dampfturbineneinheit (19) an Stellen zwischen deren Eintritt und Austritt angeschlossen ist.

11. System nach den Ansprüchen 9 und 10, **dadurch gekennzeichnet, dass** eine Anzapfleitung (28) sich stromaufwärts des mindestens einen weiteren Kondensators (63) und des mindestens einen Niederdruck-Vorwärmers (36) verzweigt und an deren jeweiligen Eintritt für das zweite Arbeitsmittel (18) angeschlossen ist.

12. System nach einem der vorhergehenden Ansprüche, **dadurch gekennzeichnet, dass** der Rückverstromungskreislauf (2) einen Anschluss für einen externen Wärmeabnehmer (57) aufweist.

13. Verfahren zur Speicherung und Abgabe von elektrischer Energie mit deren Speicherung als Wärmeenergie, mit den folgenden Schritten:
- Bereitstellen eines Systems nach einem der vorhergehenden Ansprüche;
- Leiten eines Teil des Hochtemperatur-Wärmeträgerstroms (5) vor Eintritt in die Dampferzeugungseinheit (44, 45, 46) durch den Zwischenüberhitzer (21) strömt.

## Claims

1. A system for storing and outputting electric energy stored as heat energy, comprising:
• a heat pump circuit (1) having
∘ a first working medium (7) flowing in the circuit and
∘ a compressor (10) having an electric motor (9),
• a high-temperature heat storage circuit (3) having
∘ a high-temperature heat transfer medium (5) flowing in the circuit, wherein the heat pump circuit (1) and the high-temperature heat storage circuit (3) are connected to a high-temperature heat exchanger (11) for transferring heat from the first working medium (7) to the high-temperature heat transfer medium (5),
• a re-generation circuit (2) having
∘ a second working medium (18) flowing in the circuit, wherein the high-temperature heat storage circuit (3) and the re-generation circuit (2) are connected to a steam generating unit (44, 45, 46) for transferring heat from the high-temperature heat transfer medium (5) to the second working medium (18), and having
∘ a steam turbine unit (19) with power generator (23), which is arranged downstream of the steam generating unit (44, 45, 46),
• a low-temperature heat storage circuit (4) having
∘ a low-temperature heat transfer medium (6) flowing in the circuit, wherein the re-generation circuit (2) and the low-temperature heat storage circuit (4) are connected to a low-temperature heat exchanger (61) for transferring heat from the second working medium (18) to the low-temperature heat transfer medium (6), and wherein the low-temperature heat storage circuit (4) and the heat pump circuit (1) are connected to a working medium heater (14) for transferring heat from the low-temperature heat transfer medium (6) to the first working medium (7),
wherein the low-temperature heat exchanger (61) is designed as first condenser and in the re-generation circuit (2) its inlet is connected to the outlet of the steam turbine unit (19) and/or to a extraction line (27) on the steam turbine unit (19) in a position between the inlet and outlet of the same, **characterised in that** the system is configured in such a manner that
the steam turbine unit (19) comprises a high-pressure turbine (19a) and a medium-pressure/low-pressure turbine (19b) and between the high-pressure turbine (19a) and the medium-pressure/low-pressure turbine (19b) a reheater (21) is arranged, wherein a part of the high-temperature heat transfer medium flow (5) flows through the reheater (21) before entering the steam generating unit (44, 45, 46).

2. The system according to Claim 1, **characterised in that** the heat pump circuit (1), further, comprises a recuperator (8) and an expander (12) and the first working medium (7) successively flows through the compressor (10), the high-temperature heat exchanger (11), the recuperator (8), the expander (12), the working medium heater (14) and again through the recuperator (8).

3. The system according to Claim 1 or 2, **characterised in that** the high-temperature heat storage circuit (3), further, comprises a high-temperature cold store (15) and a high-temperature hot store (16) and the high-temperature heat transfer medium (5) successively flows through the high-temperature cold store (15), the high-temperature heat exchanger (11), the high-temperature hot store (16) and the steam generating unit (44, 45, 46) .

4. The system according to any one of the preceding claims, **characterised in that**
- the heat pump circuit (1') comprises a second compressor (101) and
- the heat pump circuit (1') and the high-temperature heat storage circuit (3) are connected to a second high-temperature heat exchanger (102) for transferring heat from the first working medium (7) to the high-temperature heat transfer medium (5),
- wherein in the heat pump circuit (1') the second compressor (101) is arranged downstream of the (first) high-temperature heat exchanger (11) and the second high-temperature heat exchanger (102) is arranged downstream of the second compressor (101), and
- wherein in the high-temperature heat storage circuit (3) the second high-temperature heat exchanger (102) can be switched on parallel to the high-temperature heat exchanger (11).

5. The system according to Claims 2 and 4, **characterised in that** the compressor (10), the expander (12) and the second compressor (101) are mechanically coupled to one another via a common gearing (104).

6. The system according to any one of the preceding claims, **characterised in that** in the high-temperature heat storage circuit (3) between the high-temperature heat exchanger/s (11, 102) and the high-temperature hot store (16) an electric heater (107) is arranged.

7. The system according to any one of the preceding claims, **characterised in that** the steam generating unit (44, 45, 46) comprises a high-temperature preheater (44), a steam generator (45) and a superheater (46), through which the second working medium (18) flows in this sequence and the high-temperature heat transfer medium (5) in counter-flow.

8. The system according to any one of the preceding claims, **characterised in that** the low-temperature heat storage circuit (4) comprises at least one further condenser (62, 63) downstream of the first condenser (61), wherein all these condensers (61, 62, 63) are connected in parallel to one another in the re-generation circuit (2) and in the low-temperature heat storage circuit (4) further condensers (62, 63) arranged downstream one behind the other are each connected to a extraction line (27, 28) of the steam turbine unit (19) in positions between the inlet and outlet of the same, which are arranged upstream in the re-generation circuit (2) one behind the other.

9. The system according to Claim 8, **characterised in that** the low-temperature heat storage circuit (4), downstream of a last condenser (61, 62, 63), comprises a storage device (59) for the low-temperature heat transfer medium, having a storage region for cold low-temperature heat transfer medium (6) and a storage region for warm low-temperature heat transfer medium (6), wherein
- the inlet of the first condenser (61) is connected to the storage region for cold low-temperature heat transfer medium (6) and the outlet of the last condenser (61, 62, 63) is connected to the storage region for warm low-temperature heat transfer medium (6), and
- the working medium heater (14) is connected to the storage region for warm low-temperature heat transfer medium (6).

10. The system according to Claim 8 or 9, **characterised in that** the re-generation circuit (2) comprises at least one low-pressure preheater (36, 37), which is arranged downstream of condensers (61, 62) connected in parallel and connected to one of the extraction lines (28, 29) of the steam turbine unit (19) in positions between the inlet and outlet of the same.

11. The system according to the Claims 9 and 10, **characterised in that** an extraction line (28), upstream of the at least one further condenser (63) and of the at least one low-pressure preheater (36), branches off and is connected to the respective inlet for the second working medium (18) of the same.

12. The system according to any one of the preceding claims, **characterised in that** the re-generation circuit (2) comprises a connection for an external heat consumer (57) .

13. A method for storing and outputting electric energy stored as heat energy, having the following steps:
- providing a system according to any one of the preceding claims;
- conducting a part of the high-temperature heat transfer medium flow (5) through the reheater (21) prior to entering the steam generating unit (44, 45, 46) .

## Revendications

1. Système de stockage et de distribution d'énergie électrique avec son stockage sous forme d'énergie thermique, présentant :
• un circuit de pompe à chaleur (1) comportant
∘ un premier fluide de travail (7) circulant dans le circuit et
∘ un compresseur (10) comportant un moteur électrique (9),
• un circuit de stockage de chaleur à haute température (3) comportant
∘ un fluide caloporteur à haute température (5) circulant dans le circuit, dans lequel le circuit de pompe à chaleur (1) et le circuit de stockage de chaleur à haute température (3) sont connectés à un échangeur de chaleur (11) pour transférer la chaleur du premier fluide de travail (7) sur le fluide caloporteur à haute température (5),
• un circuit de reconversion (2) comportant
∘ un deuxième fluide caloporteur (18) circulant dans le circuit, dans lequel le circuit de stockage de chaleur à haute température (3) et le circuit de reconversion (2) sont connectés à une unité de génération de vapeur (44, 45, 46) pour transférer la chaleur du fluide caloporteur à haute température (5) au deuxième fluide caloporteur (18) et comportant
∘ une unité de turbine à vapeur (19) avec un générateur d'énergie (23), qui est disposée en aval de l'unité de génération de vapeur (44, 45, 46),
• un circuit de stockage de chaleur à basse température (4) comportant
∘ un fluide caloporteur à basse température (6) circulant dans le circuit, dans lequel le circuit de reconversion (2) et le circuit de stockage de chaleur à basse température (4) sont connectés à un échangeur de chaleur à basse température (61) pour transférer la chaleur du deuxième fluide caloporteur (18) au milieu de transfert de chaleur à basse température (6), et dans lequel le circuit de stockage de chaleur à basse température (4) et le circuit de pompe à chaleur (1) sont connectés à un réchauffeur de fluide caloporteur (14) pour transférer la chaleur du milieu de transfert de chaleur à basse température (6) au premier fluide de travail (7),
dans lequel l'échangeur thermique à basse température (61) est conçu comme un premier condensateur et dans le circuit de reconversion (2) son entrée est connectée à la sortie de l'unité de turbine à vapeur (19) et/ou au niveau d'une conduite de dérivation (27) sur l'unité de turbine à vapeur (19) en un point situé entre son entrée et sa sortie, **caractérisé en ce que** le système est conçu de telle sorte que
l'unité de turbine à vapeur (19) présente une turbine à haute pression (19a) et une turbine à moyenne pression/basse pression (19b) et un réchauffeur intermédiaire (21) est disposé entre la turbine à haute pression (19a) et la turbine à moyenne pression/basse pression (19b), dans lequel une partie du flux de transfert de chaleur à haute température (5) s'écoule à travers le réchauffeur intermédiaire (21) avant d'entrer dans l'unité de génération de vapeur (44, 45, 46) .

2. Système selon la revendication 1, **caractérisé en ce que** le circuit de pompe à chaleur (1) présente en outre un récupérateur (8) et un détendeur (12) et le premier fluide de travail (7) traverse successivement le compresseur (10), l'échangeur thermique à haute température (11), le récupérateur (8), le détendeur (12), le réchauffeur de fluide caloporteur (14) et encore le récupérateur (8).

3. Système selon la revendication 1 ou 2, **caractérisé en ce que** le circuit de stockage de chaleur haute température (3) présente en outre un accumulateur froid à haute température (15) et un accumulateur chaud à haute température (16) et le fluide caloporteur à haute température (5) traverse successivement l'accumulateur froid à haute température (15), l'échangeur thermique à haute température (11), l'accumulateur chaud à haute température (16) et l'unité de génération de vapeur (44, 45, 46).

4. Système selon une des revendications précédentes, **caractérisé en ce que**
- le circuit de pompe à chaleur (1') présente un deuxième compresseur (101) et
- le circuit de pompe à chaleur (1') et le circuit de stockage de chaleur à haute température (3) sont connectés à un deuxième échangeur de chaleur à haute température (102) pour transférer la chaleur du premier fluide de travail (7) vers le fluide caloporteur à haute température (5),
- dans lequel dans le circuit de pompe à chaleur (1'), le deuxième compresseur (101) est disposé en aval du (premier) échangeur thermique à haute température (11) et le deuxième échangeur thermique à haute température (102) est disposé en aval du deuxième compresseur (101), et
- dans lequel le deuxième échangeur thermique à haute température (102) peut être connecté en parallèle à l'échangeur thermique à haute température (11) dans le circuit de stockage de chaleur à haute température (3').

5. Système selon les revendications 2 et 4, **caractérisé en ce que** le compresseur (10), le détendeur (12) et le deuxième compresseur (101) sont couplés mécaniquement l'un à l'autre via un engrenage commun (104).

6. Système selon une des revendications précédentes, **caractérisé en ce que** un radiateur électrique (107) est disposé dans le circuit de stockage de chaleur à haute température (3) entre le ou les échangeurs de chaleur à haute température (11, 102) et l'accumulateur chaud à haute température (16).

7. Système selon une des revendications précédentes, **caractérisé en ce que** l'unité de génération de vapeur (44, 45, 46) comporte un réchauffeur à haute température (44), un générateur de vapeur (45) et un surchauffeur (46), que le deuxième fluide caloporteur (18) circule dans cet ordre et le fluide caloporteur à haute température (5) circule à contre-courant.

8. Système selon une des revendications précédentes, **caractérisé en ce que** le circuit de stockage de chaleur à basse température (4) présente au moins un autre condensateur (62, 63) en aval du premier condensateur (61), dans lequel tous ces condensateurs (61, 62, 63) sont connectés en parallèle les uns aux autres dans le circuit de reconversion (2) et d'autres condensateurs (62, 63) disposés les uns derrière les autres en aval dans le circuit de stockage de chaleur à basse température (4) sont connectés chacun à une conduite de dérivation (27, 28) de l'unité de turbine à vapeur (19) en des points situés entre son entrée et sa sortie, qui sont disposés l'un derrière l'autre en amont dans le circuit de reconversion (2).

9. Système selon la revendication 8, **caractérisé en ce que** le circuit de stockage de chaleur à basse température (4) présente un dispositif de stockage (59) du fluide caloporteur à basse température en aval d'un dernier condensateur (61, 62, 63), comporte une zone de stockage pour un fluide caloporteur froid à basse température (6) et une zone de stockage pour un fluide caloporteur chaud à basse température (6), dans lequel
- l'entrée du premier condensateur (61) est connectée à la zone de stockage pour un fluide caloporteur froid à basse température (6) et la sortie du dernier condensateur (61, 62, 63) est connectée à la zone de stockage pour le fluide caloporteur chaud à basse température (6) et
- le réchauffeur de fluide caloporteur (14) est connecté à la zone de stockage du fluide caloporteur chaud à basse température (6).

10. Système selon la revendication 8 ou 9, **caractérisé en ce que** le circuit de reconversion (2) comporte au moins un préchauffeur à basse pression (36, 37), qui est disposé en aval de condensateurs (61, 62) connectés en parallèle et qui est relié à une des conduites de dérivation (28, 29) de l'unité de turbine à vapeur (19) aux points situés entre son entrée et sa sortie.

11. Système selon les revendications 9 et 10, **caractérisé en ce qu'**une conduite de dérivation (28) bifurque en amont du au moins un autre condenseur (63) et du au moins un préchauffeur à basse pression (36) et est connectée à leur entrée respective pour le deuxième milieu caloporteur (18).

12. Système selon une des revendications précédentes, **caractérisé en ce que** le circuit de reconversion (2) présente un raccordement pour un collecteur de chaleur externe (57).

13. Procédé de stockage et de fourniture d'énergie électrique avec son stockage sous forme d'énergie thermique, comportant les étapes suivantes :
- fourniture d'un système selon une des revendications précédentes ;
- guidage d'une partie du flux caloporteur à haute température (5) à travers le réchauffeur (21) avant l'entrée dans l'unité de génération de vapeur (44, 45, 46).
